# EUROPEAN PATENT APPLICATION

(11) **EP 4 687 041 A1**
(43) Date of publication of application: **04.02.2026**
(21) Application number: 24192233.5
(22) Date of filing: 01.08.2024
(51) Int. Cl.: G06F 11/3698, G05B 19/042, G06F 8/60

(54) **METHODS AND SYSTEMS FOR DEVELOPING AND TESTING AN APP FOR AT LEAST ONE INDUSTRIAL DEVICE, ON AN INDUSTRIAL EDGE PLATFORM FOR EXECUTING APPS FOR INDUSTRIAL DEVICES**

(71) Applicant: Siemens Aktiengesellschaft, 80333 München (DE)
(72) Inventor: Fischer, Jan-Gregor, 85604 Zorneding (DE)
(74) Representative: Siemens Patent Attorneys

(57) **Abstract**

Method for developing and testing an app for at least one industrial device (101), on an industrial edge platform (104) for executing apps for industrial devices (101), the at least one industrial device (101) connected to the at least one edge computing device (105) of the platform (104), wherein the app is for collecting device-related data, wherein the platform comprises a secure runtime (106) comprising cybersecurity constraints for app protection, platform runtime protection and industrial device (101) protection, wherein the method comprises following steps:
- providing a development-and-testing environment (107) within the secure runtime (106),
- providing access to the development-and-testing environment (107) to a user,
- receiving input defining an app logic (109) from the user accessing the development-and-testing environment (107),
- configuring the app logic (109), wherein the configuring comprises
* defining the device-related data that the app receives during its runtime,
* defining runtime resources for the app,

- testing the app logic (109) by executing the app within the development-and-testing environment (107), wherein, during the execution, the app collects real-time device-related data,
- providing the app for deployment on the platform.

## Description

The present invention relates to methods and systems for developing and testing an app for at least one industrial device, on a platform for executing apps on industrial devices.

There is a long-standing need to become more flexible in the development of application logic by putting the real machine into the loop of development and test, thus preparing their internal processes for a more flexible DevOps approach. Applications resulting from this highly flexible and agile process should then become available not only on the single tested machine, but also on other machines of the same or similar type even if the controllers and sensors on the other machines come with different signal / variable configurations.

Commonly the development and test of such application logic on site, e.g. on the shopfloor of an industrial facility is performed in dedicated development and test infrastructures isolated from the real production. These infra-structures typically comprise one of the following approaches:
· Use of pre-recorded machine and process data: reproducible development and test, but extremely inflexible and limited to only whatever pro-cess and runtime behaviour was recorded before;
· Simulated machine: allows bit better flexibility but comes with a large lack of accuracy since the machining process of a simulated machine is only as accurate as the simulated scope of physics and machine control itself;
· Virtualized machine: similar with the same problem of limited accuracy as a machining process of a virtualized machine does not incorporate real physics.

If a real machine, e.g., a CNC machine for subtractive manufacturing, is used, then it is put in a dedicated environment isolated from real production. This requires trained / certified machine operators to be available and real parts, e.g., workpieces that are similar or (better) same as the ones in real production. But such machines are typically not available just for application development and tests due to high costs. Thus, application developers and testers are often competing with production process and material testers for access to the machine. This can drive development and test costs to extremes, and thus is typically not desirable by manufacturers.

Summed up, as of today, there is no means for DevOps on real machines in manufacturing production.

It is a challenge to improve on the known prior art. In particular, a compromise between ensuring that the development and test process does not affect or even put in danger the real production and having access to a real machine, e.g., CNC machine tool or CNC additive manufacturing machine, performing production operations, e.g., processing workpieces, on the shopfloor, to be able to develop and test an app for this or similar machines is difficult to achieve.

The invention is based on the problem of improving the known methods and systems for developing and testing an app such that a further optimization regarding the named challenge is reached.

Proposed is a method for developing and testing an app for at least one industrial device, on an industrial edge platform for executing and in particular managing apps for industrial devices, the at least one industrial device is connected to the at least one edge computing device of the industrial edge platform, wherein the app is for collecting, e.g., querying and receiving, de-vice-related data, e.g., tool data, workpiece quality data, production order da-ta, etc., e.g., in real-time, e.g. machine data, e.g., measurement data, e.g., motion control set points and measurement values, wherein the platform comprises at least one edge computing device with a secure runtime comprising cybersecurity constraints for app protection, platform runtime protection and industrial device protection, wherein the method comprises following steps:
- providing a development-and-testing environment, e.g., designed as an app, within or hosted by the secure runtime,
- providing access to the development-and-testing environment to a user,
- receiving input defining an app logic (109) from the user accessing the development-and-testing environment (107),
- configuring the app logic (109), wherein the configuring comprises
   * defining the device-related data that the app receives during its runtime,
   * defining runtime resources for the app,
- testing the app logic (109) by executing the app within the development-and-testing environment (107), wherein, during the execution, the app collects real-time device-related data,
- providing the app for deployment on the platform.

Testing operations may comprise one or more of testing for programming errors, endless loops, memory leaks, running tests into segmentation faults, unintentionally running denial of services attacks due to programming bugs trying to flood the network or the machine with harmful requests or data, etc.

Industrial edge platform can be designed as an open platform (industrial loT platform) for executing software close to machines and managing this software. It enables the seamless integration of IT into automation. It allows to integrate developed IT applications during ongoing operations without disrupting the production process, to collect data through industrial protocols (such as PROFINET, OPC UA, or Ethernet/IP) and securely process and exchange data in real-time - also suitable for operating Al services.

According to one embodiment, the method further comprises providing a server, in particular a web server, within the development-and-testing environment to allow a client-server communication (here user can input commands and communicate with the development-and-testing environment).

According to one embodiment it is proposed that the industrial edge platform comprises at least one edge computing device, in particular designed as an industrial PC, having the secure runtime and the at least one industrial device is connected to the at least one edge computing device of the platform. In other words, the edge computing device serves as a compute infrastructure that extends the industrial device by executing software applications that process industrial data from the industrial device in a secure and flexible manner.

The industrial device is connected to the edge computing device. The edge computing device (and preferably a backend system) is (are) part of the industrial edge platform. The edge computing device bridges between the Operational Technology OT (i.e. controller / sensor of the industrial device) and information technology IT (the world of data analytics software, preferably industrial applications also known as industrial apps).

The edge computing device provides computing resources and the secure runtime.

The industrial edge platform can be designed as a distributed software platform that contains at least one edge computing device and at least one backend (preferably exactly one backend).

Software (apps) are run on the industrial edge platform by executing it on one or more edge computing devices. This setup allows to run this software in a secure and flexible way close to the machine.

According to one embodiment it is proposed that the commands are in form of a scripting code.

According to one embodiment, the method further comprises interpreting or compiling the user input.

According to one embodiment it is proposed that the testing comprises checking the user input (running a syntax check) for errors and providing feedback to the user in case of an error (no real device-related data needed).

According to one embodiment it is proposed that configuring runtime re-sources for the app comprises specifying resources of the platform provided to the app during its execution or runtime.

According to one embodiment it is proposed that the resources comprise at least one of minimum required CPU power, main memory, disk space, access to other shared hardware resources, example given an Al accelerator card, a GPU rendering accelerator chip, a physical network card, an USB connectivity, data processing or data storage device, an LTE module, sensor data acquisition hardware, e.g., installed on the edge computing device.

According to one embodiment it is proposed that configuring runtime resources for the app comprises specifying runtime services or functionalities provided by runtime services, which are required by the app logic, e.g., a da-ta stewarding service, a data storage service, a data archiving service, a data broker service, a data analytics service, a data visualization service.

According to one embodiment it is proposed that the testing comprises checking the app logic configuration for correctness and/or completeness (no real device-related data needed).

According to one embodiment it is proposed that the testing comprises a plausibility check run on the received data, e.g., based on expert knowledge or similar and/or defining a test case that defines an expected app output for a known input of device-related data.

According to one embodiment the method further comprises integrating the app into the industrial edge platform.

In an embodiment, the app can be executed on one or more edge computing devices that are part of the industrial edge platform. The app can be managed (e.g. installed, configured, started, stopped) by the backend, which can be a part of the industrial edge platform.

In an embodiment, the method further comprises configuring the app logic to provide data back to the at least one industrial device, in particular to the at least one controller and/or to the at least one sensor, to influence the production process. This data can comprise data for configuring the logic for controlling and/or sensing.

According to another aspect of the invention a system for developing and testing an app is proposed. The system comprises at least one industrial device on a shopfloor, wherein the industrial device is connected to an edge computing device of an industrial edge platform which is designed to executing and in particular to manage one or more apps that collect, e.g., querying and receiving device-related data from at least one controller and/or from at least one sensor carried by the at least one industrial device, e.g., tool data, workpiece quality data, production order data, etc., e.g., in real-time, e.g. machine data, e.g., measurement data, e.g., motion control set points and measurement values. The industrial edge platform comprises at least one edge computing device with a secure runtime comprising cybersecurity constraints for app protection, platform runtime protection and industrial device protection, wherein the industrial edge platform further comprises a development-and-testing environment, e.g., designed as an app, within or hosted by the secure runtime, and is adapted to
- provide access to the development-and-testing environment to a user, wherein
- the development-and-testing environment is configured to
- receive input defining an app logic from the user accessing the development-and-testing environment,
- configure, e.g., with aid of the user the app logic, wherein the configuring comprises
   * defining the device-related data that the app receives, e.g., after querying or subscribing to respective data during app's runtime,
   * defining runtime resources for the app,
- test the app logic by executing the app within the development-and-testing environment, wherein, during the execution, the app collects real-time de-vice-related data,
- provide the app for deployment on the platform, e.g., to execute the app on an edge computing device of the platform, in particular in a production environment outside of (not in) the development-and-testing environment.

In the following, embodiments of the invention are explained with respect to the drawing. The drawing shows in
FIG 1 a system 100 for developing and testing an app in an industrial environment.
FIG 2 to FIG 5 examples of first and second translator 117 work.

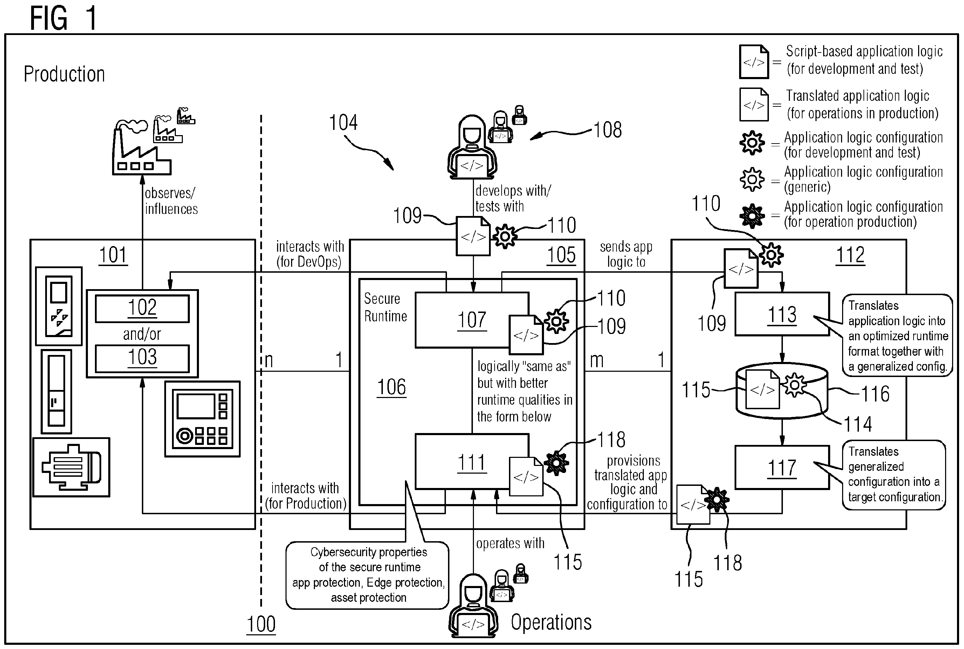

FIG 1 illustrates a system 100 for developing and testing an application or an app in an industrial environment. The system 100 comprises at least one asset or industrial device 101, i.e., a production industrial device 101 on a shopfloor. The asset can be designed as a CNC machine, e.g. for subtractive or additive manufacturing, a motor, a converter, a drive train, e.g. for driving an axis of a CNC machine. In other words, the industrial devices 101 are a part of automatization system of an industrial facility.

The asset comprises at least one controller 102 or controller unit 102. Controllers 102 for CNC machines are known from the art, e.g., FANUC 0i-F, Mitsubishi M800, Heidenhain TNC7, Siemens SINUMERIK 840D sl, SINUMERIK S7-1500 and alike. Alternatively or additionally the asset comprises at least one sensor 103 to collect real-time measurement manufacturing data. The sensor 103 can be, e.g., a vibration measurement sensor 103, such as a 10 kHz vibration measurement sensor 103, a temperature sensor 103, a liquid pressure sensor 103, an optical sensor 103 and alike.

The system 100 further comprises an industrial edge platform 104, e.g., an industrial edge for machine tools having one or more edge computing devices 105. The industrial device (asset) 101 and in particular its controller 102 is connected to at least one of the, in particular to exactly one, edge computing devices 105. It will be appreciated by the person of ordinary skill that a single edge computing device 105 can be attached to a plurality of controllers 102 and/or sensors 103 and in fact to a plurality of industrial devices 101, so that a relation 1 to n with n equal or greater than 1, holds and one edge device supports n controllers 102 and/or sensors 103 and receive production related data from them.

The edge computing device 105 provides a secure runtime 106 for running applications on the edge computing device 105 according to predefined cybersecurity properties.

The cybersecurity constraints are designed for app protection, platform runtime protection and industrial device 101 protection.

The app protection can be designed such that the apps are isolated from each other by default so that they cannot negatively impact each other. This can be implemented by applying container technologies such as Docker or Kubernetes, and by running each application in an isolated set of at least one container using a container lifecycle management, a container runtime and a container network. All interactions with other apps are carried out only via well-defined interfaces and services.

To protect edge computing device 105 runtime, the apps can be isolated from the edge computing device 105 runtime by default. They run on the edge computing device 105 but strictly obey pre-defined resource consumption quotas so that they cannot negatively impact the edge computing device 105 or other pieces of software running on the edge computing device 105. Only those interactions with the edge computing device 105 runtime are possible that are performed via well-defined interfaces and services.

To protect the industrial device 101 itself, the apps can be isolated so that no direct interaction with other industrial devices 101 is possible. This way they cannot affect other industrial devices 101, its controllers 102 and/or sensors 103 or a production processes, in which the industrial device 101 is involved in. All interaction with the industrial device 101 go through well-defined interfaces and services.

The sensors 103 are a part of sensor data acquisition hardware and can be installed directly on the corresponding industrial device 101. The sensors act as providers of data like the controllers 102.

In an embodiment, additional sensors can be installed on the edge computing device 105 itself (not shown), i.e., the additional sensors (hardware or software sensors) are not installed on the asset 101, such as a CNC machine. These additional sensors (on the edge computing device) are part of the, e.g., hardware and/or software resources of the edge computing device 105.

The secure runtime 106 on the edge computing device 105 has a development-and-test environment 107, which can be designed as a development-and-test app 107. The development-and-test environment 107 (and the development-and-test environment 107 app 107) has the following functionalities. Since the development-and-test environment 107 is hosted by the se-cure runtime 106, it inherits the above-described protection functionalities: the app protection, the edge computing device 105 runtime protection and the industrial device 101 protection.

So on the one hand, the edge computing device 105 and the industrial de-vices 101 connected to it are protected from any negative impact, if an app is executed within the development-and-test environment 107. E.g., if the app tries to consume too many edge runtime resources and/or, e.g., if it tries to flood the industrial device's 101 motion controller 102 with denial-of-service attacks, this will be parried by the secure runtime 106 functionalities.

On the other hand, the development-and-test environment 107 allows developers and testers 108 to interact with it, e.g., via a direct client-server communication, whereas the client can be designed as a development or test client run outside of the edge computing device 105 (e.g., a Visual Studio IDE, a Java Eclipse remote debugger, a Web browser) and the server can be designed as a development or test server that is provided from and run inside the development-and-test environment 107 (preferably a Web server).

Developers and testers 108 can, therefore, use the client to connect to the server in order to develop and test application logic in form of scripts (e.g. Javascript, Type-Script, Python code, etc.).

The development-and-test environment 107 or the development-and-test application 107 can comprise a compiler and/or interpreter, e.g., a C# and/or Python script code interpreter, to compile and/or interpret code, e.g., scripted code. Compiling and/or interpreting the code can be performed in an interactive mode, meaning that the developers and testers 108 can run the scripted code with the app that they are developing on the edge computing device 105 without need for interpreting or compiling the code on another device.

After access to the development-and-test application 107 has been provided to the developers and testers 108, they can define app logic 109, e.g., by using a scripting language, i.e., a script-based app logic 109.

When entering the script-based app logic 109, the development-and-test application 107 can analyse it, e.g., check syntax. Moreover, the development-and-test application 107 can prepare, e.g., compile into intermediate language or into an executable binary, the script. The developers and testers 108 are then notified of any error in the script.

To ensure proper execution of the app on the edge computing device 105 the app logic 109 needs to be configured accordingly.

Configuring an application logic configuration 110 comprises configuring device-related data the app will be receiving from the industrial device 101. E.g. signals and/or variables can be defined which are to be obtained from the industrial device's 101 sensor(s) 103 / controller(s) 102. It will be appreciated by the one skilled in the art, that the device-related data, e.g., signals and/or variables, does not have to be obtained from the sensors 103 and/or controllers 102 directly. It can be also obtained from another app installed on the edge computing device 105 or, in general, on the industrial edge platform 104.

Creating the application logic configuration 110 also comprises defining runtime resources needed for the app. In this step runtime dependencies can be defined and configured, such as the minimum required CPU power, main memory, space on disk, and access to other shared hard-ware re-sources such as an AI accelerator card, a GPU rendering accelerator chip, a physical network card, a USB connectivity, data processing or data storage device, an LTE module, etc..

The application logic configuration 110 process can additionally comprise defining dependencies to edge computing device 105 runtime services or functionalities, which can be additionally required by the app logic 109, e.g., a data stewarding service, a data storage service, a data archiving service, a data broker service, a data analytics service, a data visualization service. This configuration can be also checked for correctness, where, e.g., syntax and semantic are checked, and completeness with the help of the development-and-test application 107. There, the development-and-test application 107 can run a check for correct syntax and for feasibility of applying the configuration. Errors in the configuration are reported back to the developers and testers 108.

The scripted app can, e.g., subscribe to a configured data for receiving controller 102 axes movement data during NC code processing, continuously analyse the data by applying an AI model for workpiece processing quality monitoring, and report about the machine process quality results during or at the end of the NC program.

Next, the app logic 109, e.g., script-based app logic 109 is tested by executing the app in the development-and-test application 107 on the industrial edge platform 104, in particular on the edge computing device 105. Executing the app can depend on previously described optional script and configuration checks. None of these checks require real device-related data. In other words, in an embodiment, only when these checks are passed, the testing of the app logic 109 begins.

During the test, the app run within the development-and-test application 107 collects the real-time data from the at least one industrial device 101, e.g., receives controller 102 axes movement data during NC code processing. This data can be analysed by applying an AI model for workpiece processing quality monitoring. Then the app can report about the machine pro-cess quality results during or at the end of the NC program.

The testing comprises typical software development and test principles and/or techniques known to the one of ordinary skill. E.g., a plausibility check can be run on the received data and/or defining a test case that defines an expected app output for a known input of device-related data. The plausibility check can be based on expert knowledge or similar. The test case can be, e.g., as above, i.e., receiving controller 102 axes movement data during NC code processing, continuously analyse the data by applying an AI model for workpiece processing quality monitoring, and report about the machine process quality results during or at the end of the NC program.

In an embodiment, the app logic 109 can influence the production process by providing data back to the controllers 102 and/or sensors 103, e.g. as data for configuring the logic for controlling and/or sensing. However, only within the cybersecurity constraints, which make sure that the production, in particular the CNC manufacturing process is not negatively impacted. For this the cybersecurity constraints can allow setting only those controller 102 variables and providing only those NC programs that are not impacting a running or planned future production order.

When successfully tested the app can be deployed on the industrial edge platform 104 and in particular on the edge computing device 105. In other words, the app can become an operational app 111, i.e., an app that is actively being used in a real-world production environment, e.g. in a CNC part manufacturing shopfloor production environment. In an embodiment, the operational app 111 can be a compiled app in Microsoft DotNet C# (C-sharp), Python runtime with, as explained further below, an optimized Python code, etc.

In an embodiment, the deployment can be performed automatically, in particular, when the app is to be deployed on the same edge computing device 105, on which it was developed and tested.

Due to the protection mechanism described herein provided by the development-and-test environment 107 embedded into secure runtime 106, the system 100 ensures that the developed app logic 109 does not negatively impact the real production process while being tested in parallel on real data. This saves time, because typically, developers and testers 108 develop and test the app logic 109 with the real machine in the loop over multiple development and test cycles.

The industrial edge platform 104 can further comprise a backend system 112 that can comprise one or more backend servers.

The backend system 112 can be used to integrate the app so that it can be deployed on other edge computing devices 105 connected to the industrial devices 101 that are the same or similar to the industrial device 101 of FIG 1. The backend system 112 can be connected to m edge computing devices 105, wherein m is equal or bigger than 1.

In the following an embodiment of integration process of the app will be de-scribed in more detail. After the app logic 109, e.g., the script-based application logic, and its application logic configuration 110 have been developed and tested sufficiently, e.g., passed the test from perspective of the custom Development & Test process, the developers and testers 108 can send the app logic 109 together with the application logic configuration 110 to the backend system 112. There it can be stored for backup reasons and/or translated into an operational app 111. Translating can comprise bringing the app into an optimized app execution format. Finally, the operational app 111 can be provisioned to the same and/or other edge computing devices 105.

The operational app 111 can result from the translation of the script-based app logic 109 and application logic configuration 110 into a resource-optimized form. For example, the application logic configuration 110 can be generalized so that the app runs not only on the edge computing device 105 but also on this similar devices as the edge computing device 105. This can be done by mapping the application logic configuration 110 to a device-independent format. Moreover, an optimization of the edge device runtime resources which are needed to execute the app can be optimized, so that the developed and tested app logic 109 can be executed with less edge device runtime resources (e.g., lower load on the CPU, less main memory consumption, higher data compression on the disk, fewer calls to runtime APIs, higher utilization of hardware accelerations, etc.) during normal operations. The resource-optimized operational app 111 can be then used for operations in standard production scenarios.

At the backend system 112 target edge devices for provisioning the operational app 111 are identified. The operational app 111, preferably with a generic application logic configuration 114 is then sent to and preferably deployed on the identified devices.

In the following an embodiment of translation process of the app at the backend system 112, i.e., translating the app logic 109 and generalizing the application logic configuration 110 to create the generic application logic configuration 114 for edge devices similar to the edge computing device 105 105 of FIG 1 will be described in more detail.

The backend system 112 can comprise one or more translators. In an embodiment, a first translator 113 receives, e.g., script-based app logic 109 and its application logic configuration 110 (for development and test) from the development-and-test app 107 from the edge computing device 105. The first translator 113 can be designed as a hardware, e.g., a translator unit, as a software, e.g., a software module or a mixture of both, e.g., a translator unit with a piece of hardware adapted to support a software module designed for translation purposes as described below by way of example.

It translates the app logic 109 into an optimized runtime format with a corresponding, generalized configuration.

In a preferred embodiment, the translation of the app logic 109 is done by compiling the app logic 109 script into an "intermediate byte code" (e.g.,
https://dl.acm.org/doi/pdf/10.1145/202529.202541) or into a binary that can be run inside an already existing app on the edge computing device 105 or into an edge app that can be deployed and run individually on the edge computing device 105. In any case the result of this app logic 109 translation step is a translated application logic 115 that can be deployed to any edge device and runs on that edge device so that the usage of hardware resources of the edge device is optimized, e.g., to consume less CPU power than the original script-based app logic 109.

In an embodiment, the translation of the application logic configuration 110 into a generic application logic configuration 114 is done by mapping the individual constituents of the input configuration (application logic configuration 110) to a generalized application configuration schema in an auto-mated way as follows. This can be performed in an automated way.

First, the device-related data that the app will be receiving from the industrial device 101, e.g. signals and/or variables is mapped to a generic data model that is independent of the specific industrial device 101. Preferably for CNC machines the device-related data is mapped to a generic CNC data model using a semantic mapping approach with description logics reasoning as discussed in US 20200175031 A1 and US 11880190B2 included herein by reference.

Second, the runtime resources and service dependencies are configured. This configuration can either be used without changes - if there is only one homogeneous setup of hardware and runtime services for all the edge devices - or mapped to a device-independent format such as Docker Compose (https://docs.docker.com/compose/compose-file/).

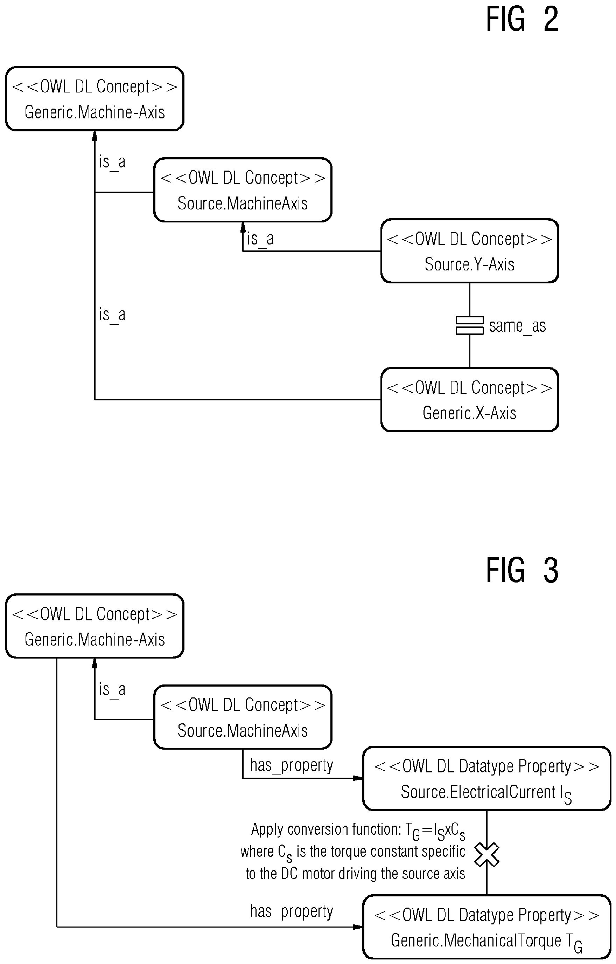

Figures 2 and 3 show each one application example for translating the application logic. Figures 2 and 3 show semantic mapping examples respectively.

FIG 2 illustrates how an application logic in C-Sharp Script can be translated with a C-Sharp compiler into a performance and resource-optimized .NET executable and bundled with an edge app into a compiled app in C-Sharp.

In this embodiment, the development-and-test environment 107 comprises a C# script code interpreter, the first translator 113 comprises a C# compiler and a first semantic config mapper (for C#), the second translator 117 comprises a second semantic config mapper (for C#), and the operational app 111 is a compiled C# application. The storage unit 116 utilizes a PostgreSQL.

The corresponding data configuration is translated with a first semantic config mapper, which can be a part of the first translator 113, by deducing the generic data concept corresponding to the input data concept using a description logics model of a CNC or Additive Manufacturing machine defined in the Web Ontology Language (https://www.w3.org/OWL/) in this specific application example. An exemplary mapping is shown in FIG 2.

The runtime resource and the runtime service configurations can stay the same in this application example assuming that there is only one type of hardware for all edge devices or assuming that all edge devices share the same configuration schema for declaring dependencies to both hardware resources and services at runtime.

FIG 3 shows how an application logic in Python script can be translated with a Python code optimizer into a performance and resource-optimized Python code.

In this embodiment, the development-and-test environment 107 comprises a python script code interpreter (alternatively or additionally to the C# script code interpreter), the first translator 113 comprises a python code optimizer (alternatively or additionally to the C# compiler) and a first semantic config mapper (for python), the second translator 117 comprises a second semantic config mapper (for python), and the operational app 111 is a python runtime with optimized python code. The storage unit 116 utilizes a CouchDB.

In this case, however, the resource-optimized Python code is not bundled with an edge app in the backend system 112. The corresponding data configuration is also translated with the first semantic config mapper, this time, e.g., by applying a data mapping rule that applies a mathematical function to convert data from one unit into another (more generic) unit. This mapping function can be defined in a semantic rule language such as the Semantic Web Rule Language (www.w3.org/Submission/SWRL/).

Also in this embodiment, the runtime resource and the runtime service configurations can stay the same in this application example assuming that there is only one type of hardware for all edge devices or assuming that all edge devices share the same configuration scheme for declaring dependencies to both hardware resources and services at runtime.

In an embodiment, the backend system 112 comprises a storage unit 116 configured to receive the translated application logic 115 (for operations in production) and the generic application logic configuration 114 from the first translator 113 and to store it for later retrieval, backup, and archiving reasons into a database in the backend system 112. In an embodiment, the storage unit 116 can be designed as a database. The storage technology can be a file system 100, a relation database, an object-oriented database, a document storage system 100, or any other kind of SQL or NoSQL database that allows storage of code/binaries and configuration data. In an embodiment, the storage can utilize CouchDB, PostgreSQL and alike.

In an embodiment, a second translator 117 is configured to translate the generalized configuration (the generic application logic configuration 114) into a target configuration 118, i.e., into app logic 109 configuration for operations in production on at least one target edge device connected to at least one target industrial device (target asset). The target edge device(s) and/or target industrial device(s) can be preselected by a user. The translation from the generic application logic configuration 114 to the target application logic configuration 118 can be performed in an inverse way compared to the first translator 113 preferably using a semantic mapping approach with description logics reasoning as discussed also in US 20200175031 A1 included herein by reference.

The second translator 117 can be designed as a hardware, e.g., a translator unit, as a software, e.g., a software module or a mixture of both, e.g., a translator unit with a piece of hardware adapted to support a software module de-signed for translation purposes as described below by way of example.

In an embodiment, the second translator 117 can comprise a second semantic config mapper. The second semantic config mapper, e.g., on a request of an IT operator responsible to manage one or multiple edge devices or on request of a technical user that automatizes deployment tasks, can map the generic configuration of data, runtime resource and service needs to the target application logic configuration 118 (for operations in production) that is selected for deployment by the real or technical user.

After translation, both the generic application logic configuration and the edge device-specific target configuration 118 for operations in production can be readily transferred to one or multiple edge devices 105, installed and run as an Operational App 111 that is configured for the target edge device and the target asset. In other words, the operational app 111 is used for Operations in production.

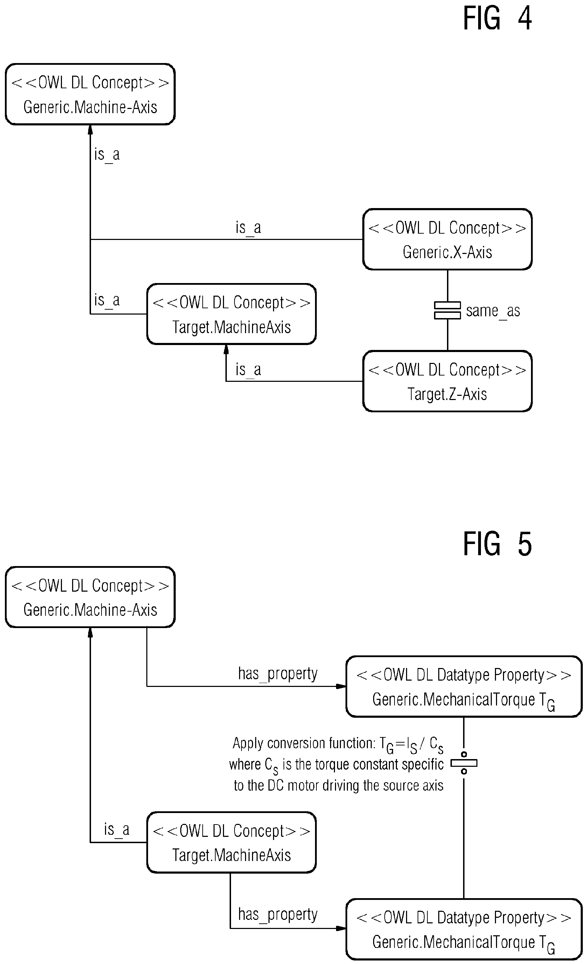

FIG 4 illustrates an embodiment, where the data configuration part of the generic application logic configuration 114 is translated with the second semantic config mapper by deducing a data concept (signals/variables) for the target asset corresponding to the generic data concept using a description logics model. The description logics model, e.g., of a CNC or Additive Manufacturing machine, can be defined in the Web Ontology Language (https://www.w3.org/OWL/).

The runtime resource and the runtime service configurations can stay the same in this embodiment, if it can be assumed that there is only one type of hardware for all edge devices or assuming that all edge devices share the same configuration schema for declaring dependencies to both hardware resources and services at runtime.

FIG 5 shows an embodiment, in which the data configuration is translated with the second semantic config mapper that applies a data mapping rule that uses a mathematical function to convert data from one unit into another unit based on the availability of the corresponding signals on the target asset. E.g., if an "ElectricalCurrent" signal is not available on some CNC machine, but instead a "MechanicalTorque" is available, then an "ElectricalCurrent" signal can also be computed from a "MechanicalTorque" signal by converting the respective values with the help of a mathematical function. This conversion function can be defined in a semantic rule language such as the Semantic Web Rule Language (https://www.w3.org/Submission/SWRL/).

Also in this embodiment, the runtime resource and the runtime service configurations can stay the same, if there is only one type of hardware for all edge devices or assuming that all edge devices share the same configuration schema for declaring dependencies to both hardware resources and services at runtime.

After deducing the target application logic configuration 118 (for operations in production) for each assigned target edge device, both the target application logic configuration 118 and the translated application logic 115 (for operations in production) are delivered to the selected edge device(s). The translated application logic 115 (for operations in production) can be provided in form of any of the following: a Complied C-Sharp App (FIG 2, FIG 4), an optimized python code (FIG 3, FIG 5) that can deployed for example on an existing python runtime app on the target edge devices or a precompiled binary to be run in an existing edge app (not shown).

Both the translated application logic 115 and the translated configuration are installed and started on the target edge device(s).

After the installation the translated application logic 115 is used in operations - logically behaving same as the original script-based application logic used during the Development & Test phase, but now running in an optimized manner (e.g. consuming less hardware resources) on the edge device.

Like the Development & Test App, which is interacting with the real machine, the logically equivalent Operational App 111 is interacting with the same (in case of deployment to the same edge device) or with another machine (in case of deployment to another edge device) in precisely the same manner from a functional point of view (use of communication protocol, pay-load formats and API calls).

And like the Development & Test App, also the Operational App 111 can now observe and influence the production, e.g., by optimizing production processes, detecting anomalies and predicting abnormal behaviour as both behave equivalently from a functional perspective.

Developers and testers 108 can use different script code and different data, resource, and service dependency configurations to build and test the application logic while the machine is securely running in full production.

In other words, a method and system 100 are described that make possible to include a real manufacturing machine in real production into a true DevOps scenario, in which developers, testers and even data scientists can try out their application logic ideas interactively without needing to care about IT security constraints and machine process availability restrictions - all of this in an end-to-end DevOps integration with the ability to automatically translate the developed and tested application logic and its configuration for later easy, transparent rollout for mass usage in highly optimized edge runtime processes allowing to deploy more apps using less resources on each edge device.

In summary, disclosed herein is a combination of the development and test approach with a translation of application logic and configuration in the backend for subsequent, semi-automated or automated deployment work-flows of an optimized application logic to a set of target edge devices.

## Claims

1. Method for developing and testing an app for at least one industrial device (101), on an industrial edge platform (104) for executing apps for industrial devices (101), the at least one industrial device (101) is connected to the at least one edge computing device (105) of the platform (104), wherein the app is for collecting device-related data from at least one controller (102) and/or from at least one sensor (103) carried by the at least one industrial device (101), wherein the platform comprises a secure runtime (106) comprising cybersecurity constraints for app protection, platform runtime protection and industrial device (101) protection, wherein the method comprises following steps:
- providing a development-and-testing environment (107) within the secure runtime (106),
- providing access to the development-and-testing environment (107) to a user,
- receiving input defining an app logic (109) from the user accessing the development-and-testing environment (107),
- configuring the app logic (109), wherein the configuring comprises
* defining the device-related data that the app receives during its runtime,
* defining runtime resources for the app,
- testing the app logic (109) by executing the app within the development-and-testing environment (107), wherein, during the execution, the app collects real-time device-related data,
- providing the app for deployment on the platform.

2. Method for developing and testing an app according to claim 1, further comprising providing a server, in particular a web server, within the development-and-testing environment (107) to allow a client-server communication.

3. Method for developing and testing an app according to claim 1 or 2, wherein the industrial edge platform (104) comprises an edge computing device (105), in particular designed as an industrial PC, having the secure runtime (106) and the at least one industrial device (101) is connected to the edge computing device (105).

4. Method for developing and testing an app according to one of the preceding claims, wherein the commands are in form of a scripting code.

5. Method for developing and testing an app according to one of the preceding claims, further comprising interpreting or compiling the user input.

6. Method for developing and testing an app according to one of the preceding claims, wherein the testing comprises checking the user input for errors and providing feedback to the user in case of an error.

7. Method for developing and testing an app according to one of the preceding claims, wherein configuring runtime resources for the app comprises specifying resources of the platform provided to the app during its execution or runtime.

8. Method for developing and testing an app according to claim 7, wherein the resources comprise at least one of minimum required CPU power, main memory, disk space, access to other shared hardware resources, example given an AI accelerator card, a GPU rendering accelerator chip, a physical network card, an USB connectivity, data processing or data storage device, an LTE module, sensor data acquisition hardware, in particular, installed on the edge computing device (105).

9. Method for developing and testing an app according to claim 7 or 8, wherein configuring runtime resources for the app comprises specifying runtime services or functionalities provided by runtime services, which are required by the app logic (109), e.g., a data stewarding service, a data storage service, a data archiving service, a data broker service, a data analytics service, a data visualization service.

10. Method for developing and testing an app according to one of the preceding claims, wherein the testing comprises checking the app logic (109) configuration for correctness and/or completeness.

11. Method for developing and testing an app according to one of the preceding claims, wherein the testing comprises a plausibility check run on the received data and/or defining a test case that defines an expected app output for a known input of device-related data.

12. Method for developing and testing an app according to one of the preceding claims, further comprising integrating the app into the industrial edge platform (104).

13. Method for developing and testing an app according to one of the preceding claims, further comprising:
configuring the app logic (109) to provide data back to the at least one industrial device (101), in particular to the at least one controller (102) and/or to the at least one sensor (103), to influence the production process.

14. System for developing and testing an app, the system (100) comprising at least one industrial device (101) on a shopfloor, wherein the industrial device (101) is connected to an edge computing device (105) of an industrial edge platform (104) for executing one or more apps that collect device-related data from at least one controller (102) and/or from at least one sensor (103) carried by the at least one industrial device (101), wherein the industrial edge platform (104) comprises a secure runtime (106) comprising cyber-security constraints for app protection, platform runtime protection and industrial device (101) protection, wherein the industrial edge platform (104) further comprises a development-and-testing environment (107) within the secure runtime (106), and is adapted to
- provide access to the development-and-testing environment (107) to a user, wherein the development-and-testing environment (107) is configured to
- receive input defining an app logic (109) from the user accessing the development-and-testing environment (107),
- configure the app logic (109), wherein the configuring comprises
* defining the device-related data that the app receives during its runtime,
* defining runtime resources for the app,
- test the app logic (109) by executing the app within the development-and-testing environment (107), wherein, during the execution, the app collects real-time device-related data,
- provide the app for deployment on the platform.
